# EUROPEAN PATENT APPLICATION

(11) **EP 4 574 889 A1**
(43) Date of publication of application: **25.06.2025**
(21) Application number: 23219055.3
(22) Date of filing: 21.12.2023
(51) Int. Cl.: C08K 3/32, C08K 5/1515, C08K 5/3412, C08K 7/14, C08L 67/02

(54) **GLASS FIBER REINFORCED RECYCLED POLYETHYLENE TEREPHTHALATE COMPOSITION AND SHAPED ARTICLES WITH INCREASED RESISTANCE TO HYDROLYSIS AND ENHANCED COMPARATIVE TRACKING INDEX**

(71) Applicant: Sipchem InnoVent SA, 1095 Lutry (CH)
(72) Inventor: ARPIN, Thierry, 6984 Pura (CH)
(74) Representative: Hepp Wenger Ryffel AG

(57) **Abstract**

A composition for applications requiring increased hydrolytic stability and/or enhanced comparative tracking indices, the composition comprising at least one recycled polyethylene terephthalate resin, glass fibers, at least one epoxy-containing compound, at least one bis-lactam, and at least one phosphorus-containing compound.

## Description

The present invention relates to a composition comprising recycled polyethylene terephthalate and glass fibers, a shaped article, an electronic or electrical apparatus, a method of manufacturing a shaped article, and the use of a composition as disclosed herein for increasing the hydrolytic stability and/or enhancing the comparative tracking index rating of articles manufactured therefrom according to the independent claims.

Polyethylene terephthalate (PET) is the most common thermoplastic polymer resin of the polyester family to date and is used in a wide range of applications. Consequently, PET is in circulation in large quantities and is accordingly also recycled on a large scale. However, polyesters such as PET are prone to degradation via hydrolysis under moist conditions and at elevated temperatures. Conditions of this type arise mainly during thermo-mechanical processing of the polymers with heating and with simultaneous presence of moisture but can also take place during the subsequent use of the resulting products. Hydrolysis of polyesters leads to polymers with reduced molecular weight and to a decrease in melt viscosity with simultaneous impairment of the mechanical properties of the polymers. Said effects severely restrict the usefulness of polyesters and moreover incur high drying cost prior to polymer processing. The drawbacks of hydrolytic degradation described above occur to an even greater extent in recycled polyesters, such as in recycled PET (RPET) in particular, because these have already undergone several thermos-mechanical processing cycles since their original manufacture.

To restore the mechanical and rheological properties impaired by hydrolytic degradation during thermos-mechanical processing, chain extenders are used. Chain extenders are multifunctional compounds that link the end groups of polymer segments together, which results in a higher molecular weight polymer. The reactivity of chain extenders should be so high that the reaction takes place within a short time, preferably fast enough to perform this step during extrusion. A large number of chain extenders with different kinds of reactions have been developed for polyesters in the past and are known from the state of the art.

By way of example, WO 98/47940 A1 describes bifunctional caprolactam chain extenders for producing high molecular weight polyesters. Similarly, U.S. Pat. No. 3,657,191 discloses a composition containing linear polyester and bis-epoxy compounds with terminal epoxy groups for increasing the molecular weight of the polyester. Since the reactivity of these chain extenders with carboxyl end groups of polyesters is very high under extrusion conditions, such compounds often bear the disadvantage of causing branched products and/or significant, abrupt molecular weight increases during extrusion. This holds in particular true when these chain extenders are incorporated at the high levels necessitated by current hydrolysis resistance requirements. Naturally, the often unforeseeable viscosity increases associated with the increase in molecular weight also have a detrimental effect on the performance manufacturing operations such as injection molding. Moreover, the stabilizing effect is based more on an initial increase in molecular weight due to chain extension than on hydrolysis protection that also exists in the final product and over the lifetime of the same.

In order to extend their range of application, polyesters are frequently reinforced with reinforcing agents such as glass fibers. However, this is detrimental to their electrical insulation properties and favors electrical tracking. Electrical tracking is the formation of conductive pathways on the surface of a polymer under certain conditions and at a certain voltage. Electrical tracking in a polymer can be a source of fire and/or breakage of parts. Therefore, resistance to electrical tracking is often an important safety requirement for a material used in certain electrical or electronic applications. A common method of reporting the electrical tracking resistance of a polymer is by its comparative tracking index rating (CTI).

For example, as disclosed in EP 3 323 854 B1, polybutylene terephthalate (PBT) resins themselves have a very high comparative tracking index (CTI) of 600 V, which is higher than the tracking resistance of polyethylene terephthalate (PET) resins. However, when these polyester resins are compounded with various fillers such as stabilizers, flame retardants or reinforcing glass fibers to improve mechanical properties, their tracking resistance deteriorates significantly, e.g. to 325 V or even lower, depending on the amount of filler added. However, some applications can require a material having a higher comparative tracking index.

Thus, there is still an increasing demand for glass fiber reinforced recycled polyethylene terephthalate (RPET) compositions for engineering resins which feature a higher resistance to hydrolysis and/or enhanced tracking resistance compared to currently available glass fiber reinforced polyethylene terephthalate resins, in particular glass fiber reinforced recycled polyethylene terephthalate resins, or those described in the prior art.

It is an object of the present invention to overcome these and other drawbacks of the prior art and in particular to provide a glass fiber reinforced recycled polyethylene terephthalate composition and a shaped article comprising such a composition that feature increased stability against hydrolysis and/or enhanced tracking resistance. In particular, it is an object of the present invention to provide a glass fiber reinforced recycled polyethylene terephthalate composition with increased stability against hydrolysis and with enhanced tracking resistance. Further objects of the present invention are to provide an electronic or electric apparatus comprising or essentially consisting of a composition as disclosed herein, and to propose the use of a composition as disclosed herein for increasing the hydrolytic stability and/or enhancing the comparative tracking index rating of articles manufactured therefrom.

These and other objects are solved with a composition, a shaped article, an electronic or electrical apparatus, a method of manufacturing, and the use of a composition as disclosed herein according to the independent claims. Advantageous embodiments are subject of the dependent claims.

The composition according to the present invention comprises at least one recycled polyethylene terephthalate resin, glass fibers, at least one epoxy-containing compound, at least one *bis-*lactam, and at least one phosphorus-containing compound.

An epoxy-containing compound as used herein is understood to be a compound comprising at least one epoxide functional group. In particular, the epoxy-containing compounds have a molecular weight of less than 3000 g/mol, preferably of less than 1500 g/mol, and are not polymeric.

A preferred epoxy-containing compound comprises at least three epoxy groups per molecule of the compound, more preferably at least four epoxy groups per molecule of the compound, and most preferably at least six epoxy groups per molecule of the compound. The epoxy-containing compound may be polymeric or non-polymeric, with non-polymeric being preferred.

Polyethylene terephthalate (PET) as used herein and commonly understood by a person skilled in the art is a semi-aromatic polyester derived from terephthalic acid (or dimethyl terephthalate) and mono ethylene glycol, wherein the sum of terephthalic acid (or dimethyl terephthalate) and mono ethylene glycol reacted constitutes at least 90 percent of the mass of monomer reacted to form the polymer. The skilled person will appreciate that the term "virgin PET" is to be understood to mean PET that is produced directly from a petrochemical feedstock and has not been processed or used before. A virgin polyethylene terephthalate material is one which is not post-consumer and exhibits a melting peak temperature between 225 °C and 255 °C, as identified during the second thermal scan in procedure 10.1 in ASTM D3418, when heating the sample at a rate of 10 °C/minute.

Recycled polyethylene terephthalate (RPET) as used herein and commonly understood by a skilled person refers to any PET material that comes from a recycled source rather than the original, unprocessed petrochemical feedstock, i.e. virgin PET. Recycled polyethylene terephthalate (RPET) may be produced, in particular, by depolymerization of polyethylene terephthalate (PET) bottle flakes, amorphous PET (A-PET), crystalline PET (C-PET), PET-films, PET-fibers, PET-textiles, and post-consumer recycled PET (PCR-PET), as will be understood by the skilled person.

It is desirable that recycled polyethylene terephthalate (RPET) be incorporated back into new molded or extruded articles since the use of recycled polyethylene terephthalate (RPET) lowers the environmental footprint of a product. Nevertheless, the reusability of PET has so far often been hampered due to the fact that thermo-mechanically recycled polyethylene terephthalate (RPET) is inferior in quality to virgin polyethylene terephthalate (PET), especially after multiple recycling cycles. Hence, the use of recycled polyethylene terephthalate (RPET) has been mostly limited to less demanding applications. By contrast, the present invention enables the use of recycled polyethylene terephthalate (RPET) in advanced applications requiring high hydrolytic stability and/or high tracking resistance.

As is known to the skilled person, lactams are cyclic amides. The lactam structural motif can be represented according to the following structural formula (1):

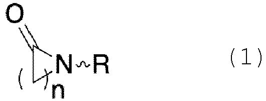

In the illustrated structural formula (1), *n* indicates the lactam ring size, with *n* being typically an integer of 1 to 5, wherein the resulting lactams are referred to as α-lactams (three-membered ring), β-lactams (four-membered ring), γ-lactams (five-membered ring), δ-lactams (six-membered ring), and ε-lactams (seven-membered ring), respectively.

Consequently, a *bis*-lactam is understood to be any compound having the formula (2):

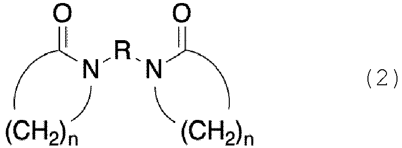

In the illustrated structural formula (2), *n* is an integer of between 1 and 15, preferably between 4 and 10, most preferably 5, and *R* is any functional group or residue linking the lactam rings, in particular a carbonyl group. It is also conceivable that at least one of the lactam rings of the *bis*-lactam is substituted and/or fused (condensed) to further rings. The synthesis of compounds according to formula (2) is described in WO 98/47940.

Specific representatives of *bis*-lactams that may be used according to the present invention are *bis*-N-acyllactams having the formula (3):

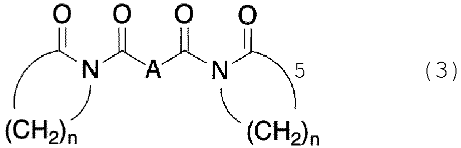

Therein, n is an integer of between 1 and 15, preferably between 4 and 10, most preferably 5, and A is selected from alkyl groups, such as alkylenediamines, in particular hexamethylenediamine, or aromatic groups. The synthesis of compounds according to formula (3) is described in EP 0 286 253 A2.

A phosphorus-containing compound as used herein is in particular understood to be a metal phosphate, a metal phosphonate or a metal phosphinate, preferably a metal phosphate. In particular, a metal phosphate for use in the present invention is calcium hydrogen phosphate.

It has now been surprisingly found that the combination of at least one epoxy-containing compound, at least one bis-lactam, and at least one phosphorus-containing compound confers enhanced hydrolytic stability and excellent comparative tracking indices to glass fiber reinforced recycled polyethylene terephthalate resins. This is contrary to expectations, in particular with respect to hydrolysis stability, as previous publications such as EP 2 184 311 A1 report that the use of carbonyl-*bis-*caprolactam and other carbonyllactams in polyesters leads to increased hydrolysis rates rather than an improvement in hydrolytic stability of the respective polyester films. To the contrary, the present inventors have not only found that the use of *bis*-lactams - and especially N,N'-hexane-1,6-diylbis(hexahydro-2-oxo-1H-azepine-1-carboxamide), hereinafter "CBA" - does not preclude one from obtaining polyesters with improved hydrolytic stability, but furthermore, that the use of CBA also helps to obtain polyesters with enhanced tracking resistance.

Without wishing to be bound by theory, addition of a carboxylic acid group to an epoxy group leads to the formation of the respective hydroxyalkyl ester. The hydroxyl group of said hydroxyalkyl ester may in turn be captured by reaction with one or both of the *bis*-lactam and the metal phosphate.

In a preferred embodiment of the composition according to the present invention, at least one of the epoxy-containing compounds is an epoxidized fatty acid ester.

The use of epoxidized fatty acid esters is preferred because these compounds are not suspected to be toxic, feature high temperature stability and a migration behavior in the polymer matrix, which can be adjusted via the acid used. Furthermore, since they are based on renewable raw materials, their use is also preferred from the point of view of sustainability and environmental protection.

The fatty acid ester of said epoxidized fatty acid ester may preferably be selected from linseed oil, soybean oil, sunflower seed oil, safflower oil, hempseed oil, tung oil, oiticica oil, corn oil, sesame oil, cottonseed oil, castor oil, olive oil, peanut oil, rapeseed oil, coconut oil, babassu oil, palm oil, fish oil. Most preferably, the epoxidized fatty acid ester is epoxidized linseed oil. Epoxidized linseed oil may be represented by the following exemplary structure (4):

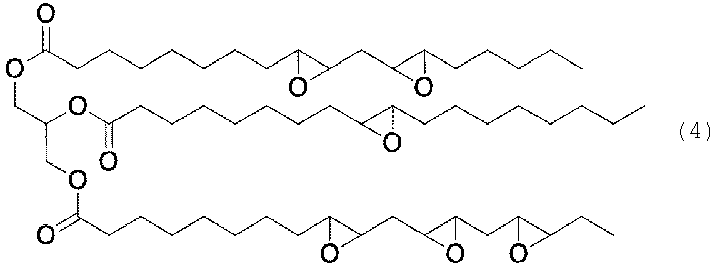

Epoxidized linseed oil (ELO; CAS No. 8016-11-3) is available, for example, from Valtris Specialty Chemicals under the trade name Lankroflex^{™} L.

Epoxidized linseed oil was found to be particularly suitable and effective in enhancing the hydrolytic stability while allowing for excellent comparative tracking resistance indices of recycled polyethylene terephthalate resins.

In a preferred embodiment of the composition according to the present invention, at least one of said *bis*-lactams in the composition is carbonyl-*bis*-caprolactam or N,N'-hexane-1,6-diylbis(hexahydro-2-oxo-1H-azepine-1-carboxamide) or both. CBA (CAS No. 5888-87-9) is readily available and sold as a polymerization activator under the Bruggolen^{®} brand name by Brüggemann. It is in the form of pellets that melt at above 70 °C which allows for dust-free and safe processing.

In a preferred embodiment, the at least one epoxy-containing compound is selected from the group consisting of epoxidized fatty acid ester, ethylene-n-butyl-acrylate-co-glycidyl methacrylate (EBA-GMA) terpolymer, ethylene-methyl-acrylate-glycidyl methacrylate (EMA-GMA) copolymer, and methylmethacrylate-butadiene-styrene (MBS) copolymer. The at least one bis-lactam is one or both of carbonyl-*bis*-caprolactam and N,N'-hexane-1,6-diylbis(hexahydro-2-oxo-1H-azepine-1-carboxamide), and the at least one phosphorus-containing compound is one or both of calcium hydrogen phosphate and hydroxyapatite.

Such compositions are characterized by both an exceptionally high tracking resistance and excellent hydrolytic stability.

It is particularly preferred if the polymer composition comprises epoxidized linseed oil, N,N'-hexane-1,6-diylbis(hexahydro-2-oxo-1H-azepine-1-carboxamide), and calcium hydrogen phosphate.

As will be explained in detail in the comparative experiments, the compositions comprising epoxidized linseed oil, N,N'-hexane-1,6-diylbis(hexahydro-2-oxo-1H-azepine-1-carboxamide) (CBA), and calcium hydrogen phosphate exhibit particularly good hydrolysis resistance and tracking resistance.

In a preferred embodiment of the composition disclosed herein, at least one of said phosphorus-containing compounds is selected from the group consisting of a metal phosphate, a metal phosphonate and a metal phosphinate. In a particularly preferred embodiment of the composition disclosed herein, the phosphorus-containing compound is at least one of calcium hydrogen phosphate and hydroxyapatite.

The total amount of epoxy-containing compounds in the composition may be 0.1 to 5 weight percent, based on the total weight of the composition. Preferably, the total amount of epoxy-containing compounds in the composition is 0.5 to 3 weight percent, based on the total weight of the composition. In particular, the total amount of epoxidized fatty acid esters in the composition may be 0.1 to 5 weight percent, preferably 0.5 to 3 weight percent, based on the total weight of the composition.

In the aforementioned ranges, a noticeable chain-extending effect occurs without the tendency to gel formation getting out of hand.

Additionally, or alternatively, the total amount of *bis*-lactams in the composition may be 0.1 to 5 weight percent, based on the total weight of the composition. Preferably, the total amount of *bis*-lactams in the composition is 0.5 to 2 weight percent, based on the total weight of the composition. In particular, the total amount of one or both of carbonyl-*bis*-caprolactam and N,N'-hexane-1,6-diylbis(hexahydro-2-oxo-1H-azepine-1-carboxamide) in the composition may be 0.1 to 5 weight percent, preferably 0.5 to 2 weight percent, based on the total weight of the composition.

Below 0.1 weight percent the effect is too small and amounts of more than 5 weight percent result is gelation and an abrupt viscosity rise during extrusion. In particular, it was found that the performance, i.e. the hydrolytic stability and comparative tracking index (CTI) rating, of compositions according to the present invention was best if the total amount of *bis*-lactams in the polymer composition is 0.5 to 2 weight percent, based on the total weight of the composition, since at higher *bis*-lactam contents in particular the comparative tracking index (CTI) ratings of the resulting compositions were found to decrease.

Additionally, or alternatively, the total amount of phosphorus-containing compound in the composition may be 0.1 to 5 weight percent, based on the total weight of the composition. Preferably, the total amount of phosphorus-containing compound in the composition is 0.1 to 2.5 weight percent, based on the total weight of the composition. In particular, the total amount of one or both of calcium hydrogen phosphate and hydroxyapatite in the composition may be 0.1 to 5 weight percent, preferably 0.1 to 2.5 weight percent, based on the total weight of the composition.

The total amount of the at least one recycled polyethylene terephthalate resin comprised in the composition may be 40 to 90 weight percent, preferably 50 to 80 weight percent, based on the total weight of the composition.

The above quantity ranges allow further fillers and additives to be added as required in amounts needed for them to take effect.

In a preferred embodiment, the composition is substantially free of any other semi-aromatic polyester apart from recycled polyethylene terephthalate.

The composition comprises at least glass fibers as reinforcing agent. The glass fibers may preferably be present in the composition in an amount of 5 to 80 weight percent, based on the total weight of the composition. The reinforcing agent may more preferably be present in the composition in an amount of 10 to 50 weight percent and most preferably of 25 to 40 weight percent, based on the total weight of the composition. A high content, especially of 50 weight percent or more, of reinforcing agent in the composition is particularly relevant when the composition is used in composite materials that are not injection molded.

In a preferred embodiment, the composition disclosed herein comprises at least one additional reinforcing agent selected from the group consisting of mineral fillers and natural fillers. In particular, the mineral filler may be at least one of whiskers, kaolin, calcined kaolin, wollastonite, talc, chalk, glass beads, amorphous silica, asbestos, calcium silicate, calcium metasilicate, magnesium carbonate, powdered quartz, mica, barium sulfate, and feldspar. The natural filler may preferably be kenaf.

Fiber reinforced polyester has higher strength at all temperatures compared to the unreinforced polyester matrix. It was observed that the thermo-mechanical properties of the compositions disclosed herein, in particular the tensile strength and modulus of elasticity, increased when the fiber volume content is increased up to 50 weight percent, based on the total weight of the composition. However, these properties decreased at the fiber content higher than that of 50 weight percent, based on the total weight of the composition. On the other hand, tensile elongation and impact energy values decreased when the fiber content was increased. All in all, the addition of reinforcing agents, i.e. the sum of glass fibers and optional additional reinforcing agent, in an amount of 10 to 50 weight percent, based on the total weight of the composition, constitutes a suitable range for effectively improving the thermo-mechanical properties of the compositions disclosed herein. This range can even be broadened to 5 to 80 weight percent, based on the total weight of the composition, in case of composite materials that are not for injection molding, such as profile or film extrusion, pul-trusion, prepreg, vacuum molding or compression molding.

The glass fibers to be used together with the compositions disclosed herein may be conventional glass fibers known in the art. There are no particular limitations on the cut length, the diameter or the shape of the glass fibers. For example, the glass fibers may be cylindrical fibers, cocoon-shaped fibers, and fibers having an oval-shaped cross-section. There are also no particular limitations on the glass cutting method used when cutting glass strands or glass roving into chopped strands of a prescribed length.

There are also no particular limitations on the variety of glass used, but in terms of quality, either E-glass or corrosion-resistant glass containing the element zirconium within the glass composition can be used particularly favorably.

Further, in order to improve the interface characteristics between the glass fiber and the resin matrix, glass fiber that has been surface-treated with an organic treatment agent (surface treatment agent) such as a silane compound including an aminosilane compound or an epoxy compound can be used favorably. There are no particular limitations on this surface treatment agent, and any conventional surface treatment agent can be used favorably.

In general, the compositions disclosed herein, comprising a combination of at least one epoxy-containing compound and at least one bis-lactam, are already characterized by comparatively high impact strength, which can be further increased by the use of toughening agents known per se.

In some embodiments, the composition additionally comprises 0.5 to 15 weight percent, based on the total weight of the composition, of at least one toughening agent.

A "toughening agent" as used herein is understood to be an agent that, when added to the recycled polyethylene terephthalate resin, increases the impact strength of an injection molded element essentially consisting of said recycled polyethylene terephthalate resin, in particular when the impact strength is measured using the "Charpy notched impact strength test" according to ISO 179.

The toughening agent, also known as impact modifier, may be a reactive toughening agent or it may be a non-reactive toughening agent. In some embodiments, the composition may comprise both reactive and non-reactive toughening agents. Preferably, the composition according to the present invention comprises a reactive toughening agent.

Reactive toughening agents are preferred for strengthening of polyesters since these form a stable dispersed phase by grafting to the polyester matrix. By contrast, non-reactive toughening agents can be dispersed into polyester resins by intensive compounding but may coalesce downstream in the compounder.

Preferably, the toughening agent is selected from the group consisting of methacrylate-butadiene-styrene copolymers, acrylate elastomers, acrylonitrile-styrene-acrylate copolymers, acrylonitrile-butadiene-styrene copolymers, high rubber graft acrylonitrile-butadiene-styrene copolymers, acrylate-olefin copolymers, silicone rubbers, silicone-acrylic rubbers, ethylene-propylene non-conjugated diene elastomers, acrylonitrile-styrene-ethylene-propylene non-conjugated diene elastomers, ethylene-methyl methacrylate-glycidyl methacrylate copolymers, ethylene-n-butyl-acrylate-co-glycidyl methacrylate (EBA-GMA) terpolymer rubber, and combinations thereof. Even more preferably, the toughening agent is selected from the group consisting of methacrylate-butadiene-styrene copolymers, acrylate-olefin copolymers, ethylene-methyl methacrylate-glycidyl methacrylate copolymers, ethylene-n-butyl-acrylate-co-glycidyl methacrylate (EBA-GMA) terpolymer rubber, and combinations thereof.

The above-mentioned toughening agents have proven to be particularly suitable, since they are generally readily available and impart polyester resins with particularly high impact strength when measured according to the "Charpy notched test" (ISO 179).

The comparative tracking index (CTI) rating of the composition may be at least 450 V. Preferably, the comparative tracking index (CTI) rating of the composition is at least 550 V. In particular, the comparative tracking index (CTI) rating of the composition disclosed herein and comprising 5 to 80 weight percent, preferably 10 to 50 weight percent, most preferably 25 to 40 weight percent, of glass fibers, based on the total weight of the polymer composition, is at least 450 V, preferably at least 550 V.

The CTI can be determined using the measurement method prescribed in the third edition of IEC (International Electrotechnical Commission) 60112. Specifically, the CTI is measured using a 0.1% by mass aqueous solution of ammonium chloride and a platinum electrode. A prescribed number of drops (100 drops) of this aqueous solution of ammonium chloride is dripped onto each test piece, and the voltage at which none of the test pieces (n=S) undergoes breakdown is determined and recorded as the CTI.

One or more conventional additives may be added to the compositions disclosed herein. For instance, a flame retardant and flame-retardant synergist may be added for the purpose of improving flame retardancy. Due to their plasticizing effect, thermal stability and dual use as nucleating agents in semi-aromatic polyester resins, preferred flame retardants to be used together with the present invention are phosphorus-containing flame retardants such as metal phosphates, metal phosphonates and metal phosphinates. Additionally or alternatively, an antioxidant and heat stabilizer may be added for the purpose of improving heat resistance. UV stabilizers may be added for the purpose of reducing degradation and discoloration. Other additives include fillers, inert fillers, viscosity modifiers, nucleating agents, colorants and dyes, lubricants, plasticizers, and mold release agents.

In a particular embodiment, the composition may essentially consist of:
- 40 to 89 weight percent of at least one recycled polyethylene terephthalate resin;
- 5 to 80 weight percent, preferably 10 to 50 weight percent, most preferably 25 to 40 weight percent, glass fibers;
- 0.1 to 5 weight percent, preferably 0.5 to 2 weight percent, of at least one bis-lactam, in particular carbonyl-bis-caprolactam or N,N'-hexane-1,6-diylbis(hexahydro-2-oxo-1H-azepine-1-carboxamide) or both;
- 0.1 to 5 weight percent, preferably 0.5 to 3 weight percent, of at least one epoxy-containing compound, in particular at least one epoxidized fatty acid ester, preferably epoxidized linseed oil; and
- 0.1 to 5 weight percent, preferably 0.1 to 2.5 weight percent, of at least one phosphorus-containing compound, in particular at least one metal phosphate;
each based on the total weight of the composition.

Optionally, the above embodiment may include an additional 0.5 to 15 weight percent of at least one toughening agent. Again, weight percentages refer to the total weight of the compositions, including toughening agent.

Such a composition features both enhanced hydrolytic stability and excellent tracking resistance. Moreover, such a composition is very stable and unlikely to suffer dielectric breakdown, and can therefore be used favorably for the manufacture of electric or electronic articles that are subjected to extreme usage conditions.

The metal phosphate may preferably be at least one of calcium hydrogen phosphate (CaHPO₄) and hydroxyapatite (Ca₅(PO₄)₃OH) for their nontoxicity, generally ready availability and effectiveness as flame retardants. In addition, the present inventors have found that the aforementioned metal phosphates afford a higher comparative tracking index and improved hydrolytic stability of the compositions disclosed herein.

The object is further solved with a shaped article comprising a composition as disclosed herein.

The term "shaped article" as used herein includes, in particular, bulk material for melting in an extruder. Such bulk material is also known to the skilled person under the terms granules or pellets.

In many cases, it is desirable for molded objects or the granules from which they are formed to be colored. For use in electrical applications, polymer compositions having orange, red, green, blue, dark gray or black color are frequently used, for example, to label or classify products.

Hence, the shaped article may further comprise one or a combination of organic and inorganic pigment. The pigment may in particular be carbon black.

It is desirable to add carbon black as a pigment to provide a dark gray or black color. The problem occurring after the addition of carbon black, i.e. the decrease in the comparative tracking index rating and the occurrence of tracking at lower voltages, respectively, is mitigated by the compositions disclosed herein.

The shaped articles disclosed herein may be used alone as molding granules or mixed with other polymers. The granules may be used to produce fibers, films, and coatings as well as injection molded or extruded articles, particularly for end use applications where enhanced resistance against hydrolysis is desired. However, in a particular embodiment of the present invention, the shaped articles disclosed herein are not used to produce polyester films.

Molding of the compositions disclosed herein into shaped articles or parts can be carried out according to methods known to those skilled in the art. Preferred are generally utilized molding methods such as injection molding, extruding molding, pressing molding, foaming molding, blow molding, vacuum molding, injection blow molding, rotation molding, calendar molding and solution casting molding.

The object is further solved with an electronic or electrical apparatus containing a component comprising or essentially consisting of a composition as disclosed herein.

The electronic or electrical apparatus may be a charging gun, an inverter, a circuit breaker, a sensor, a relay, a solenoid, a connector, an electric box, an electronic container and/or a switch.

The beneficial effects of such articles and electronic or electrical apparatuses are essentially the same as those already described for the compositions disclosed herein.

The object is further solved with a method of manufacturing a shaped article comprising a composition as disclosed herein with at least one epoxidized fatty acid ester as disclosed herein.

In general, the compositions disclosed herein can be obtained by blending all of the component materials using any blending method. The components are preferably mixed and made as homogeneous as possible. As a specific example, all of the component materials are mixed to homogeneity using a mixer such as a blender, kneader, roll extruder, etc. to give a polymer resin composition. Alternatively, part of the materials may be mixed in a mixer, and the rest of the materials may then be added and further mixed until homogeneous. Further alternatively, the materials may be dry-blended in advance, and a heated extruder is then used to melt and knead until homogeneous, and then to extrude in a strand shape, followed by cutting to a desirable length to become pellets. The latter method may in particular be used to prepare master batches that can be mixed with more polymer resin at a later point in time.

However, according to the method of manufacturing disclosed herein, the epoxidized fatty acid ester, in particular epoxidized linseed oil, and the *bis-*lactam, in particular carbonyl-*bis*-caprolactam and/or N,N'-hexane-1,6-diylbis(hexahydro-2-oxo-1H-azepine-1-carboxamide), are added to and melted together with at least one of the at least one recycled polyethylene terephthalate resins. The at least one phosphorus-containing compound present in the compositions disclosed herein may be added to the mixture comprising the epoxidized fatty acid ester, the *bis-*lactam and the at least one recycled polyethylene terephthalate resin or added to and melted together with at least one of the at least one recycled polyethylene terephthalate resins.

Preferably, the epoxidized fatty acid ester and the *bis*-lactam are premixed and added to and melted together with at least one of the at least one recycled polyethylene terephthalate resins of the composition disclosed herein.

This way, a sudden increase in viscosity during extrusion can be avoided particularly effectively since both compounds are present in the extruder at the same time and are available for the total amount of the recycled polyethylene terephthalate resin of the composition.

The object is further solved with the use of a composition as disclosed herein for increasing the hydrolytic stability and/or for enhancing the comparative tracking index (CTI) rating of articles manufactured therefrom.

In particular, the object is solved with the use of a composition comprising at least one epoxidized fatty acid ester, at least one of carbonyl-*bis*-caprolactam and N,N'-hexane-1,6-diylbis(hexahydro-2-oxo-1H-azepine-1-carboxamide), and at least one of calcium hydrogen phosphate and hydroxyapatite as disclosed herein for increasing the hydrolytic stability and/or for enhancing the comparative tracking index (CTI) rating of articles manufactured therefrom.

### Comparative examples

The following comparative examples are intended to exemplify the inventive effect of the present invention. Unless otherwise indicated, all quantities are based on the total weight of the respective compositions:

| | **REF** | **INV1** | **INV2** |
|---|---|---|---|
| RPET resin | 61.00 | 61.00 | 60.00 |
| Glass fibers | 30.00 | 30.00 | 30.00 |
| Antioxidant | 0.50 | 0.50 | 0.50 |
| Lubricant | 0.50 | 0.50 | 0.50 |
| Toughener | 3.00 | 3.00 | 3.00 |
| Epon 1002 | 0.50 | 0.50 | 0.50 |
| ELO | 2.50 | 2.50 | 2.50 |
| CaHPO₄ | 2.00 | 1.00 | 2.00 |
| CBA C20P | - | 1.00 | 1.00 |

The materials used in the above comparative examples were:
RPET resin: Recycled PET flakes from bottles (Intrinsic viscosity 0.64 dL/g) available under the trade name Monflakes^{®} from Montello S.p.A..
Glass fibers: ECS 03 T-187H available from Nippon Electric Glass. The chopped strands from E-glass are designed for reinforcement of engineering thermoplastics such as PBT and PET.
Antioxidant: Phenolic antioxidant pentaerythritol tetrakis[3-[3,5-di-tert-butyl-4-hydroxyphenyl]propionate (CAS Number 6683-19-8) available under the trade name Irganox^{®} 1010 from BASF.
Mold release agent: PETS L342, pentaerithritol tetrastearate, available from Faci.
Lubricant: Oxidized polyethylene way (CAS Number 68441-17-8) available under the trade name Licowax^{®} PED 521 from Clariant.
Toughener: Ethylene-n-butyl-acrylate-co-glycidyl methacrylate (EBA-GMA) (CAS Number 51541-08-3) available under the trade name LOTADER^{®} AX 8750 from Arkema.
Epon 1002: A bisphenol-A polyepoxide resin having a functionality of 2 (CAS Number 25036-25-3) available under the trade name EPON^{™} 1002F from Hexion.
ELO: Epoxidized linseed oil (CAS Number 8016-11-3) available from Valtris Specialty Chemicals under the trade name Lankroflex^{™} L.
CaHPO₄: A highly compactable directly compressible porous dibasic anhydrous calcium phosphate (Calcium Hydrogen Phosphate) available from Sigma Aldrich.
CBA C20P: Bruggolen^{®} C20P, N,N'-hexane-1,6-diylbis(hexahydro-2-oxo-1H-azepine-1-carboxamide (CAS Number 5888-87-9) available from Brüggemann.

### Methods

The formulations listed in the tables above were investigated for their thermo-mechanical properties and tracking resistance. For RPET, a 40 mm twin screw extruder with a screw design suitable for glass fiber reinforced PET compound was used for melting the formulations. The temperature profile of the extruder's heating zones was 285 °C - 280 °C - 280 °C - 275 °C - 275 °C-270 °C - 265 °C - 265 °C (in conveying direction), the screw speed was 200 RPM, and the output was approximately 100 kg per hour. The temperature of the mold used to produce the tensile bars by injection molding was set at 110 °C.

Tensile properties were measured according to ISO 527-2. Hydrolysis resistance was determined by exposing tensile bars for 48 hours (RPET) in steam using a pressure cooker at 121 °C. The table below refers to this test as the "pressure cooker test" (PCT). The exposed bars were then held at ambient conditions for at least 24 hours and tensile properties were subsequently determined according to ISO 527-2 as above. Relative resistance of the formulations to tracking, i.e. the comparative tracking index (CTI), was determined according to IEC60112.

### Results

If the above formulations are measured according to the methods defined herein, the following values are obtained:

| | **REF** | **INV1** | **INV2** |
|---|---|---|---|
| **Dry as molded** | | | |
| Stress at break [MPa] | 112 | 119 | 128 |
| | | | |

| **after 48 hours/121 °C, PCT** | | | |
|---|---|---|---|
| Stress at break [MPa] | 43 | 52 | 62 |
| Retention [%] | 38 | 44 | 48 |
| | | | |

| **Tracking** | | | |
|---|---|---|---|
| CTI [V] | 275 | 325 | 375 |

The results obtained for RPET show the improved hydrolytic stability of formulations "INV1" and "INV2" which are according to the present invention, i.e. comprising a combination of recycled polyethylene terephthalate resin, glass fibers, epoxy-containing compounds EBA-GMA and epoxidized linseed oil, bis-lactam CBA and phosphorous-containing compound calcium hydrogen phosphate. Increasing the content of phosphorus-containing compound calcium hydrogen phosphate results in both higher hydrolytic stability, as exemplified by higher stress at break and retention values, and a higher tracking resistance, as exemplified by the CTI values of "INV1" and "INV2" compared to "REF". However, increased hydrolytic stability and tracking resistance is only obtained in the presence of the remaining components per the present invention, including CBA.

## Claims

1. A composition comprising at least one recycled polyethylene terephthalate resin, glass fibers, at least one epoxy-containing compound, at least one *bis*-lactam, and at least one phosphorus-containing compound.

2. The composition according to claim 1, wherein at least one of said epoxy-containing compounds is an epoxidized fatty acid ester, wherein the fatty acid ester is preferably selected from linseed oil, soybean oil, sunflower seed oil, safflower oil, hempseed oil, tung oil, oiticica oil, corn oil, sesame oil, cottonseed oil, castor oil, olive oil, peanut oil, rapeseed oil, coconut oil, babassu oil, palm oil, fish oil, most preferably the epoxidized fatty acid ester is epoxidized linseed oil.

3. The composition according to claim 1 or 2, wherein at least one of said bis-lactams is carbonyl-*bis*-caprolactam or N,N'-hexane-1,6-diylbis(hexahydro-2-oxo-1H-azepine-1-carboxamide) or both.

4. The composition according to any one of the preceding claims, wherein at least one of said phosphorus-containing compounds is selected from the group consisting of a metal phosphate, a metal phosphonate and a metal phosphinate, preferably at least one of calcium hydrogen phosphate and hydroxyapatite.

5. The composition according to any one of the preceding claims, wherein the total amount of epoxy-containing compounds, in particular of epoxidized fatty acid esters, in the polymer composition is 0.1 to 5 weight percent, preferably 0.5 to 3 weight percent, based on the total weight of the composition, and/or wherein the total amount of *bis-*lactams, in particular of one or both of carbonyl-*bis-*caprolactam and N,N'-hexane-1,6-diylbis(hexahydro-2-oxo-1H-azepine-1-carboxamide), in the composition is 0.1 to 5 weight percent, preferably 0.5 to 2 weight percent, based on the total weight of the composition, and/or wherein the total amount of phosphorus-containing compound, in particular of one or both of calcium hydrogen phosphate and hydroxyapatite, in the composition is 0.1 to 5 weight percent, preferably 0.1 to 2.5 weight percent, based on the total weight of the composition.

6. The composition according to any one of the preceding claims, wherein said at least one recycled polyethylene terephthalate resin is/are present in an amount of 40 to 90 weight percent, preferably 50 to 80 weight percent, based on the total weight of the composition.

7. The composition according to any one of the preceding claims, wherein the amount of said glass fibers in the composition is between 5 and 80 weight percent, more preferably 10 to 50 weight percent, most preferably in an amount of 25 to 40 weight percent, based on the total weight of the composition.

8. The composition according to any one of the preceding claims, additionally comprising 0.5 to 15 weight percent, based on the total weight of the polymer composition, of at least one toughening agent.

9. The composition according to claim 8, wherein said toughening agent is selected from the group consisting of glass fibers, methacrylate-butadiene-styrene copolymers, acrylate elastomers, acrylonitrile-styrene-acrylate copolymers, acrylonitrile-butadiene-styrene copolymers, high rubber graft acrylonitrile-butadiene-styrene copolymers, acrylate-olefin copolymers, silicone rubbers, silicone-acrylic rubbers, ethylene-propylene non-conjugated diene elastomers, acrylonitrile-styrene-ethylene-propylene non-conjugated diene elastomers, ethylene-methyl methacrylate-glycidyl methacrylate copolymers, ethylene-n-butyl-acrylate-co-glycidyl methacrylate (EBA-GMA) terpolymer rubber and combinations thereof, preferably said toughening agent is selected from the group consisting of methacrylate-butadiene-styrene copolymers, acrylate-olefin copolymers, ethylene-methyl methacrylate-glycidyl methacrylate copolymers, ethylene-n-butyl-acrylate-co-glycidyl methacrylate (EBA-GMA) terpolymer rubber and combinations thereof.

10. The composition according to any one of the proceeding claims, in particular according to claim 7, wherein the comparative tracking index (CTI) rating, measured by IEC60112, of the polymer composition is at least 450 V, preferably at least 550 V.

11. The composition according to any one of the preceding claims, essentially consisting of:
- 40 to 89 weight percent of at least one recycled polyethylene terephthalate resin;
- 5 to 80 weight percent, preferably 10 to 50 weight percent, most preferably 25 to 40 weight percent, glass fibers;
- 0.1 to 5 weight percent, preferably 0.5 to 2 weight percent, of at least one *bis*-lactam, in particular carbonyl-bis-caprolactam or N,N'-hexane-1,6-diylbis(hexahydro-2-oxo-1H-azepine-1-carboxamide) or both;
- 0.1 to 5 weight percent, preferably 0.5 to 3 weight percent, of at least one epoxy-containing compound, in particular at least one epoxidized fatty acid ester, preferably epoxidized linseed oil;
- 0.1 to 5 weight percent, preferably 0.1 to 2.5 weight percent, of at least one phosphorus-containing compound, in particular at least one metal phosphate;
- Optionally, 0.5 to 15 weight percent of at least one toughening agent;
each based on the total weight of the polymer composition.

12. A shaped article, in particular bulk material for melting in an extruder, comprising the composition according to any one of claims 1 to 11.

13. An electronic or electrical apparatus containing a component comprising or essentially consisting of the composition according to any one of claims 1 to 11.

14. The apparatus according to claim 13, wherein the apparatus is a charging gun, an inverter, a circuit breaker, a sensor, a relay, a solenoid, a connector, an electric box, an electronic container and/or a switch.

15. A method of manufacturing a shaped article comprising a composition according to any one of claims 1 to 11, wherein said epoxidized fatty acid ester, in particular epoxidized linseed oil, and said *bis*-lactam, in particular carbonyl-*bis*-caprolactam and/or N,N'-hexane-1,6-diylbis(hexahydro-2-oxo-1H-azepine-1-carboxamide), are added to and melted together with at least one of said at least one recycled polyethylene terephthalate resins, and wherein said at least one phosphorus-containing compound is added to a mixture comprising said epoxidized fatty acid ester, said *bis-*lactam and said recycled polyethylene terephthalate resin or added to and melted together with at least one of the at least one recycled polyethylene terephthalate resins, preferably said epoxidized fatty acid ester and said *bis*-lactam are premixed and added to and melted together with at least one of said at least one semi-aromatic polyester resins.

16. The use of a composition according to any one of claims 1 to 11, the composition in particular comprising at least one epoxidized fatty acid ester, at least one of carbonyl-bis-caprolactam and N,N'-hexane-1,6-diylbis(hexahydro-2-oxo-1H-azepine-1-carboxamide), and at least one of calcium hydrogen phosphate and hydroxyapatite, for increasing the hydrolytic stability and/or for enhancing the comparative tracking index (CTI) rating of articles manufactured therefrom.
